# DEMANDE DE BREVET EUROPEEN

(11) **EP 1 244 161 A1**
(43) Date de publication de la demande: **25.09.2002**
(21) Numéro de dépôt: 01402465.7
(22) Date de dépôt: 26.09.2001
(51) Int. Cl.: H01M 4/62, H01M 4/02, H01M 2/16

(54) **Eléments de batteries lithium-ion fabriqués à partir d'une poudre microcomposite à base d'une charge et d'un fluoropolymére**

(30) Priorité: 19.03.2001 FR 0103673
(71) Demandeur: Atofina, 92800 Puteaux (FR)
(72) Inventeur: Barrière, Benoît, 27170 Barc (FR); Bussi, Philippe, 76000 Rouen (FR)
(74) Mandataire: Neel, Henry

(57) **Abrégé**

La présente invention concerne un élément de batterie Lithium-ion choisi parmi le séparateur et les couches électroactives et qui résulte de la mise en forme d'une poudre microcomposite comprenant un polymère fluoré sous forme de particules entre 0,1 et 0,5 µm et des charges.

La présente invention concerne aussi une électrode de batterie Lithium-ion comprenant la couche électroactive précédente associée à une couche de métal.

La présente invention concerne aussi une batterie Lithium-ion comprenant au moins un élément tel que le séparateur, la couche électroactive ou l'électrode définis ci dessus.

Cette poudre microcomposite peut être préparée par coatomisation d'une solution aqueuse contenant les particules de polymère fluoré entre 0,1 et 0,5 µm et d'une solution aqueuse des charges. Elle peut aussi être préparée par floculation ou coagulation d'une solution aqueuse contenant les particules de polymère fluoré entre 0,1 et 0,5 µm et d'une solution aqueuse des charges.

La mise en forme de cette poudre microcomposite consiste à la mettre de préférence sous forme de film pour obtenir un film d'électrode ou de séparateur. Ensuite ces films sont assemblés pour former une batterie. Cette étape (assemblage, remplissage de l'électrolyte, packaging etc...) est connue en elle même.

## Description

### [Domaine de l'invention]

Les électrodes d'une batterie lithium-ion sont constituées d'une couche électroactive associée à une couche de métal (le collecteur). La couche électroactive est un polymère fluoré (ou fluoropolymère) fortement chargé de carbone et/ou d'oxydes, le polymère fluoré est aussi qualifié de liant. Ce polymère fluoré assure la cohésion de la couche électroactive.

Dans la réalisation des batteries lithium-ion, la couche électroactive contenant soit des charges d'oxydes métalliques de lithium soit des charges de carbone et/ou de graphite, avec d'autres ingrédients pour régler les performances électriques, est réalisée en général par dispersion des charges dans un solvant en présence d'un liant polymérique fluoré. La dispersion ainsi obtenue est par exemple déposée sur un collecteur métallique par une méthode de "Cast" (couchage), le solvant est ensuite évaporé pour obtenir une électrode négative ou positive selon les charges utilisées.

Les collecteurs métalliques utilisés sont en général des feuilles ou des grilles de cuivre dans le cas de l'électrode négative et d'aluminium dans le cas de l'électrode positive. Le liant polymérique assure la cohésion de la couche électroactive ainsi que l'adhésion sur le collecteur métallique. Cette cohésion et cette adhésion sont nécessaires pour la bonne réalisation des batteries.

Une mauvaise cohésion de la couche ne permet pas par exemple d'enrouler ou d'empiler les électrodes au sein de la structure multicouche de la batterie sans avoir un effritement préjudiciable du matériau électroactif. Cet inconvénient majeur est produit également lorsque l'adhésion au collecteur est insuffisante.

Les performances de la batterie dépendent étroitement des caractéristiques du liant. Un bon liant permet de réaliser des couches suffisamment chargées en ingrédients électroactifs par rapport à la quantité de liant nécessaire et permet ainsi d'avoir une capacité spécifique élevée. Le liant doit également être stable vis à vis des réactions d'oxydo-réductions lors des cycles de charges et de décharges et doit être également insensible à l'électrolyte présent dans la batterie. Cet électrolyte contient typiquement des solvants de type carbonate comme le carbonate de propylène, d'éthylène, de diméthyle éthyle et un sel de lithium comme LiPF₆ ou LiBF₄. A titre d'exemple le PVDF ou les copolymères du VF₂ sont des matériaux qui possèdent les caractéristiques pour leur utilisation en tant que liants de batterie au lithium.

L'invention concerne ces couches électroactives, les électrodes comprenant ces couches électroactives et aussi des séparateurs utilisés dans ces batteries. Les séparateurs des batteries lithium-ion peuvent être soit des membranes microporeuses en polyoléfine soit des films de polymère fluoré chargés de silice en poudre. Les séparateurs de la présente invention sont de ce dernier type.

### [l'art antérieur]

Le brevet **DE 3538732** décrit une électrode faite d'une pâte pouvant être étendue et constituée de 70 à 80 % en masse de poudre de carbone de taille de granulés 30 à 300 µm et de 10 à 20 % en masse d'une solution de PVDF à 4 à 8% de PVDF dans le DMF (diméthylformamide) et d'au moins 5 % en masse de poudre de PTFE de taille de granulés de 10 à 100 µm. La pâte est étendue sur un substrat en aluminium puis séchée par une lampe infra rouge pendant ½ h à 4 h. Cette électrode à base de PVDF et de carbone est perméable aux gaz et aux liquides.

Dans la demande de brevet **JP 52122276 A** on décrit une électrode préparée par dépôt sur un textile poreux de carbone anisotropique pyrolysé, lui-même recouvert d'une dispersion aqueuse de TEFLON® (PTFE) et le tout est séché pour former une couche poreuse hydrophobe.

Dans le brevet **US 5268239** on décrit la préparation d'une plaque séparatrice. Cette plaque à base de graphite est un mélange contenant de 25 à 75% en masse de graphite et de 25 à 75% en masse de résine phénolique. Cette plaque est ensuite pyrolysée entre 800 et 1000°C, puis graphitée entre 2300°C et 3000°C. Ce brevet décrit aussi l'application d'un film de fluoropolymère pour éviter la migration de l'électrolyte.

Dans la demande de brevet **WO 200024075** on décrit la préparation d'un substrat, utilisable pour la préparation de membrane, ce substrat comprend une matrice de fibre poreuse, caractérisé par le fait que les fibres sont collées avec de la silice et un polymère fluoré. Il est décrit aussi le procédé, avec dans un premier temps la dispersion des fibres dans l'eau puis dans un deuxième temps le dépôt de cette dispersion pour former un réseau. Le réseau de fibres est alors séché et compacté. Une dispersion aqueuse de fluoropolymère pouvant être introduite avant ou après cette étape de séchage et compactage.

Dans le brevet **FR 2430100** il est décrit un procédé de préparation d'une poudre sèche finement divisée caractérisée en ce qu'elle est constituée par des grains ayant une dimension maximum d'environ 5 µm. Cette poudre comprend du carbone précatalysé et un polymère fluorocarboné hydrophobe, par exemple le PTFE. Cette poudre est obtenue par floculation d'une co-suspension des grains de carbone précatalysé et des grains de polymères.

Dans le brevet **EP 0948071** il est une méthode pour produire une électrode pour piles à combustible, ainsi qu'une poudre catalytique préparée en mélangeant une poudre fine de carbone supportant un métal catalytique avec une dispersion colloïdale d'un polymère. La suspension ainsi obtenue est séchée.

Dans le brevet **EP 0557259** il est décrit la préparation d'une électrode de diffusion gazeuse pour cellule électrochimique. Cette électrode est préparée à l'aide d'une poudre de noir de carbone dispersée dans un solvant organique en présence de polyéthylène soluble. La dispersion est ensuite séchée ce qui permet au polyéthylène de recouvrir la surface du noir. Ce polyéthylène est ensuite fluoré. Cette poudre de noir de carbone hydrophobe est ensuite mélangée à un noir de carbone de type acétylénique supportant un métal catalyseur ainsi que du PTFE pour former des agrégats. Ces agrégats sont ensuite pressés à 20 kg/cm² et frittés à 340°C pendant 20 minutes.

Dans le brevet **EP 0928036** il est décrit une méthode de préparation d'électrode perméable au gaz, en effectuant une dispersion de particules de noir de carbone ou de noir de carbone supportant un catalyseur en utilisant un équipement à haut cisaillement pour l'homogénéiser tel que les micro-fluidiseurs puis en ajoutant un liant à la dispersion obtenue puis un agent stabilisant. Ce mélange est ensuite déposé sur un tissu électro-conducteur puis séché et fritté à 300 - 400°C.

Dans la demande de brevet **WO 200030202** il est décrit une composition moulable permettant la préparation de plaques collectrices de courant par compression moulage ou injection moulage. Cette composition comprend un liant polymère non fluoré; parmi les polymères utilisables on trouvera les polyphénylène sulfides , les polyphénylène éther modifiés, les polymères cristaux liquides, les polyamides, les polyimides, les polyesters, les phénoliques, les résines époxydes et les vinyl esters. Parmi les particules conductrices on trouvera plus particulièrement les particules carbonées. Ces particules carbonées sont présentes à hauteur d'au moins 45 % en masse.

Fischer dans **Journal of applied electrochemistry** 28 (1998) pp 277-282 a étudié la préparation de MEA (membrane and électrode assembly) en pulvérisant le mélange d'un slurry (suspension) d'un métal catalyseur, d'une solution de Nafion® (acrylate fluoré) dans l'eau et de glycerol, sur une membrane à base de Nafion 117 ® chauffée. Les solvants sont ensuite évaporés par chauffage à 150°C.

Dans le brevet **US 4214969** il est décrit une plaque bipolaire pour piles à combustibles constituée de graphite et de fluoropolymère dans un ratio 2.5 :1 à 16:1. Ces plaques bipolaires présentent une conductivité volumique 4.10⁻³ Ω.in. Ce mélange de graphite et de fluoropolymère est mélangé à sec dans un mélangeur pendant 25 minutes puis introduit dans un moule à chaud sous pression.

La demande de brevet **GB 2220666** décrit une méthode de coatomisaton pour la préparation de particules de noir de carbone revêtues de façon très homogène par des particules de latex synthétique. Il n'est cité aucun polymère fluoré dans la description ni dans les exemples.

Le brevet **US 5720780** décrit un procédé de fabrication d'électrodes ou de séparateur qui comprend principalement trois étapes :
*Etape 1* : On mélange, en l'absence de solvant, du PVDF poudre (homopolymère) avec un des principes actifs de la batterie (en poudre également) ; la poudre composite obtenue, issue donc d'un mélange de poudre, est homogène ; le brevet insiste sur les conditions de mélange qui jouent ensuite sur les propriétés électrochimiques obtenues. Cette homogénéisation peut se faire à température ambiante ou à température plus élevée, mais en tous cas en dessous du point de fusion du polymère.
*Etape 2* : On laisse la poudre obtenue « repomper » un plastifiant (de préférence le diméthyl-adipate) avec là encore une étape de mélange.
*Etape 3* : On met en oeuvre la poudre plastifiée par pressage à une température bien définie : T°(point de ramollissement) < T°(mise en oeuvre) < T°(point de fusion du polymère). Ce pressage de la poudre peut se faire directement sur les collecteurs de courant (Cuivre, Aluminium).

Selon ce brevet on aboutit dans un premier temps à une poudre composite qui est ensuite mise en oeuvre, on part de Kynar® (PVDF) en poudre dont nous connaissons la granulométrie moyenne : de l'ordre de 5 à 20 µm. La granulométrie moyenne des poudres de graphite où d'oxydes lithiés est du même ordre ; la silice ou le noir de carbone sont par contre des charges beaucoup plus fines (< 1 µm). On mélange donc entre eux, soit des objets de ≈ 10 µm (Kynar et Graphite), soit un objet de ≈ 10 µm (Kynar) avec un objet fin (Silice, Noir). Le brevet ne précise pas quelle est la granulométrie de la poudre composite résultante. On rappelle que le mélange peut se faire éventuellement à une température, qui reste toutefois en dessous du point de fusion du PVDF.

La demande de brevet japonais **JP09219190 A** publiée le 19 août 1997 décrit un procédé de fabrication d'électrodes, qui comprend trois étapes :
*Etape 1* : Le PVDF (de préférence un homopolymère) est mis en solution dans un solvant (de préférence la DMF : diméthyl-formamide). On ajoute ensuite à cette solution les principes actifs de la batterie. Le mélange résultant est appelé Slurry.
*Etape 2* : Ce slurry est atomisé à une température inférieure au point de fusion du polymère. Qui plus est, il n'y a pas plus de 50°C de différence entre la température d'atomisation et le point d'ébullition du solvant. On obtient là aussi une poudre composite (sphérique) dont le diamètre moyen est de 100 à 200 µm.
*Etape 3* : On met en oeuvre la poudre pour obtenir une électrode, par exemple par pressage (mais on ne précise pas la température de pressage).

Dans ce brevet on utilise la technologie de l'atomisation pour obtenir une poudre composite qui est ensuite mise en oeuvre. Cependant on atomise un Slurry qui contient les principes actifs de la batterie mais où le PVDF est en solution. La granulométrie de la poudre composite obtenue est donnée à 100 ou 200 µm, donc très grossière, sachant que l'on veut faire des électrodes les plus fines possibles (150 à 300 µm). La morphologie exacte de la poudre composite n'est pas connue mais il est plus que probable que le PVDF atomisé à partir d'une solution se coagule autour des charges sous forme d'un film.

### [Le problème technique]

Dans l'art antérieur le mélange des charges et du polymère fluoré n'est pas suffisamment intime. On a découvert qu'en partant d'une poudre microcomposite comprenant un polymère fluoré sous forme de particules entre 0,1 et 0,5 µm et des charges on pouvait fabriquer des éléments de batterie lithium-ion tels que des couches électroactives, des électrodes et des séparateurs de bien meilleure qualité. Cette poudre microcomposite peut être préparée par coatomisation d'une solution aqueuse contenant les particules de polymère fluoré entre 0,1 et 0,5 µm et d'une solution aqueuse des charges. Elle peut aussi être préparée par floculation ou coagulation d'une solution aqueuse contenant les particules de polymère fluoré entre 0,1 et 0,5 µm et d'une solution aqueuse des charges.

L'utilisation d'une poudre microcomposite permet une répartition préalable du PVDF autour de la charge de matière active (graphite pour l'électrode négative de la batterie, silice pour les séparateurs type « Bellcore » , oxyde métallique de lithium pour l'électrode positive de la batterie). Cette poudre peut être mise en oeuvre par des moyens très simples (électrodéposition, pressage, extrusion avec des plastifiants, étalement d'une pâte aqueuse). Cette poudre peut être dispersée aussi dans un solvant. Cela peut être soit l'eau (l'avantage est alors celui d'un procédé écologique), soit un solvant latent comme l'acétone (l'avantage est alors la facilité de mise en oeuvre), soit la NMP (comme pour la mise en oeuvre classique d'une électrode). Le solvant latent gonfle le polymère fluoré et le dissout à plus haute température. Comme il n'y a pas necessairement d'étape de mise en solution du PVDF (c'est à dire qu'on peut mettre en oeuvre la poudre microcomposite par électrodéposition, pressage, extrusion avec des plastifiants, étalement d'une pâte aqueuse ou encore dispersion dans l'eau) on peut utiliser indifféremment un copolymère ou un homopolymère du VF2. En effet l'homopolymère est plus difficilement soluble que le copolymère. Or il est acquis que l'homopolymère apporte plus de tenue thermomécanique à la batterie (plage de température d'utilisation plus élevée). C'est donc un avantage supplémentaire de la présente invention de pouvoir utiliser le PVDF homopolymère.

La différence majeure entre la présente invention et l'art antérieur **JP09219190 A** vient du fait que dans cet art antérieur on atomise un Slurry, qui contient les principes actifs de la batterie, mais où le PVDF est en solution. Dans la présente au cours de la préparation de la poudre microcomposite le polymère fluoré est toujours sous forme de particules entre 0,1 µm et 0,5 µm et non pas en solution, c'est pourquoi les poudres obtenues sont très différentes.

### [Brève description de l'invention]

La présente invention concerne un élément de batterie Lithium-ion choisi parmi le séparateur et les couches électroactives et qui résulte de la mise en forme d'une poudre microcomposite comprenant un polymère fluoré sous forme de particules entre 0,1 et 0,5 µm et des charges.

La présente invention concerne aussi une électrode de batterie Lithium-ion comprenant la couche électroactive précédente associée à une couche de métal.

La présente invention concerne aussi une batterie Lithium-ion comprenant au moins un élément tel que le séparateur, la couche électroactive ou l'électrode définis ci dessus.

Cette poudre microcomposite peut être préparée par coatomisation d'une solution aqueuse contenant les particules de polymère fluoré entre 0,1 et 0,5 µm et d'une solution aqueuse des charges. Elle peut aussi être préparée par floculation ou coagulation d'une solution aqueuse contenant les particules de polymère fluoré entre 0,1 et 0,5 µm et d'une solution aqueuse des charges.

La mise en forme de cette poudre microcomposite consiste à la mettre de préférence sous forme de film pour obtenir un film d'électrode ou de séparateur. Ensuite ces films sont assemblés pour former une batterie. Cette étape (assemblage, remplissage de l'électrolyte, packaging etc...) est connue en elle même.

### [Description détaillée de l'invention]

**S'agissant du polymère fluoré** on désigne ainsi tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de monomère on peut citer le fluorure de vinyle; le fluorure de vinylidène (VF2); le trifluoroethylene (VF3); le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro( 1,3 -dioxole); le perfluoro(2,2-dimethyl- 1,3 -dioxole) (PDD); le produit de formule CF2=CFOCF2CF(CF3)OCF2CF2X dans laquelle X est SO2F, CO2H, CH2OH, CH2OCN ou CH20PO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogene ou F(CF2)z et z vaut 1, 2, 3 ou 4; le produit de formule R3OCF=CH2 dans laquelle R3 est F(CF2)z- et z est 1, 2, 3 or 4; le perfluorobutyl ethylene (PFBE); le 3,3,3-trifluoropropene et le 2-trifluoromethyl-3 ,3 ,3 -trifluoro- 1 -propene.

Le fluoropolymère peut être un homopolymère ou un copolymère, il peut aussi comprendre des monomères non fluorés tels que l'éthylène. Avantageusement le fluoropolymère est du PVDF homopolymère ou copolymère.

Les polymères préférés selon l'invention sont ceux obtenus par polymérisation en émulsion (pour une description générale de cette technologie voir par exemple, « Principles of Polymerization », G. Odin, Chapitre 4, pp. 319-339, Wiley Interscience, 2nde Edition, 1981), c'est à dire disponibles sous forme de latex. Les polymères préférés selon l'invention sont les polymères fluorés, parmi lesquels on peut citer le polyfluorure de vinyle (PVF), le polyfluorure de vinylidène (PVDF), le polychlorotrifluoroéthylène (PCTFE), le polytétrafluoroéthylène (PTFE), les copolymères tétrafluoroéthylène /perfluoropropène (FEP), les copolymères tétrafluoroéthylène / perfluoroéther (PFA), les copolymères tétrafluoroéthylène / éthylène (ETFE), les copolymères chlorotrifluoroéthylène / éthylène (ECTFE). Parmi les polymères fluorés, on préfère le PVDF, et plus particulièrement le PVDF préparé par la polymérisation en émulsion aqueuse telle que décrite dans les brevets US 4025709, US 4569978, US 4360652, US 626396 et EP 0655468.

Les latex de polymères utiles au sens de l'invention sont caractérisés par des extraits sec, à l'issue de l'étape de synthèse compris entre 15 et 70 % en poids, de préférence 25 à 60 % en poids. Les tailles de particules de ces latex sont comprises entre 50 nm et 600 nm, de préférence de 100 à 350 nm.

Par PVDF au sens de l'invention on entend l'homopolymère de fluorure de vinylidène (VF2) mais aussi les copolymères de VF2 contenant au moins 50 % en poids de VF2, de préférence au moins 70 % en poids de VF2, de préférence encore au moins 85 % en poids de VF2, et au moins un autre monomère copolymérisable, fluoré ou non. Ces monomères copolymérisables peuvent permettre une réticulation ultérieure éventuelle du PVDF. Parmi les monomères fluorés copolymérisables, on peut citer le chlorotrifluoroéthylène (CTFE), l'hexafluoropropylène (HFP), le trifluoroéthylène (VF3), le tétrafluoroéthylène (TFE). Parmi les monomères fluorés copolymérisables, on préfère l'HFP et le CTFE. Parmi les monomères non fluorés copolymérisables, on peut citer les éthers ou esters, vinyliques ou allyliques. Parmi les monomères non fluorés copolymérisables, on préfère les monomères permettant d'améliorer l'adhésion du PVDF sur les métaux, en particulier le cuivre et l'aluminium.

Le polymère fluoré peut être aussi un AMF (Acrylic Modified Fluoropolymer ou polymère fluoré modifié par un monomère acrylique). Cet AMF est avantageusement sous forme de latex. On obtient un latex d'AMF en débutant la polymérisation par la partie fluorée (homopolymère ou copolymère de VF2), puis on introduit les monomères acryliques tels que le MAM (méthacrylate de méthyle), l'acrylate de butyle ou un monomère fonctionnel comme le GMA (méthacrylate de glycidyle) dont on fait la polymérisation. Comme les monomères acryliques et en particulier le MAM sont extrêmement compatibles avec le PVDF, ces monomères vont diffuser dans la particule initiale fluorée (appelée semence ou « seed »). Ainsi, la particule élémentaire d'AMF a une structure assez homogène, et on fabrique déjà à la polymérisation un alliage quasi miscible. Il existe bien sûr de nombreuses variantes, par exemple sur la durée et le débit d'introduction des monomères (on peut aussi faire le latex de PVDF dans un premier réacteur, le transférer dans un autre éventuellement après un temps de stockage puis on fait la partie acrylique), mais le principe général est là. Parmi les AMF, on préfère :
- les AMF à base de PVDF ou de VF2/HFP.
- les AMF possédant au moins 70 % en poids de monomère fluoré, de préférence 85 %.
- les AMF ayant dans la partie acrylique des monomères permettant d'améliorer l'adhésion du PVDF sur les métaux, en particulier le cuivre et l'aluminium.

Le latex de PVDF peut aussi être constitué d'un mélange de latex, où l'un au moins des latex est un latex de PVDF, et le ou les autres latex sont des latex de polymères fluorés. Par exemple on peut utiliser un mélange d'un latex d'homopolymère de VF2 et d'un latex de copolymère de VF2 et d'HFP, ou un mélange d'un latex d'homopolymère de VF2 et d'un copolymère de VF2 et d'un monomère promoteur d'adhésion du PVDF sur les métaux, ou un mélange d'un latex d'homopolymère de VF2 et d'un latex de PTFE. On préfère les mélanges de latex contenant au moins 50 % en poids de VF2, de préférence au moins 70 % en poids de VF2.

Ce mélange de latex, où l'un au moins des latex est un latex de PVDF, peut aussi comprendre un ou plusieurs latex de polymère non fluoré. Parmi les polymères non fluorés on peut citer les émulsions acryliques, les émulsions à base d'acétate de vinyle, les émulsions à base de chlorure de vinyle, les émulsions d'élastomères à base de butadiène. Parmi les polymères non fluorés on préfère les polymères acryliques, et plus particulièrement les polymères et copolymères acryliques à base de méthacrylate de méthyle ou d'acrylate d'éthyle possédant une température de transition vitreuse supérieure ou égale à 40°C, de préférence supérieure ou égale à 60°C. On préfère plus particulièrement en outre les polymères et copolymères acryliques contenant de plus des monomères copolymérisables favorisant l'adhésion des compositions selon l'invention sur les métaux. Parmi ces monomères on peut citer les monomères comportant une ou plusieurs fonctions acide, anhydride, hydroxyle, amine et sels correspondants, silane et leur forme hydrolysée, époxy, uréide, phosphate, sulfonate, etc... Dans ces mélanges de latex, où l'un au moins des latex est un latex de PVDF, on préfère les mélanges contenant au moins 70 % en poids de VF2, de préférence au moins 85 % en poids de VF2.

Le latex ou mélange de latex essentiellement à base de PVDF peut aussi contenir dans sa phase aqueuse un ou plusieurs polymères hydrosolubles. Parmi les polymères hydrosolubles, on préfère ceux favorisant l'adhésion des compositions selon l'invention sur les métaux. Dans ces mélanges d'un ou plusieurs latex essentiellement à base de PVDF et d'un ou plusieurs polymères hydrosolubles, on préfère les mélanges contenant au moins 70 % en poids de VF2, de préférence au moins 85 % en poids de VF2.

On peut également introduire dans le latex ou les mélanges de latex selon l'invention, des petites molécules organiques (masse molaire < 1000 g/mol) permettant de favoriser l'adhésion des compositions selon l'invention sur les métaux. Parmi ces petites molécules organiques, on peut citer l'acide 5-sulfoisophtalique et ses sels métalliques. Le taux d'addition préféré de ces molécules promoteurs d'adhésion est inférieur à 5 % en poids par rapport au polymère fluoré.

**S'agissant des charges** il faut distinguer la silice qu'on utilise pour le séparateur et celles qu'on utilise pour les couches électroactives.

Les oxydes métalliques de lithium du type LiMₓO_{y} dans lequel M est un métal sont utilisées pour la réalisation des couches électroactives des électrodes positives. Avantageusement M est un métal de transition tel que Mn, Ni, ou Co.

Les produits à base de carbone sont utilisés pour réalisation des couches électroactives des électrodes négatives. A titre d'exemple de produits à base de carbone on peut citer le graphite, les agrégats de noir de carbone, les fibres de carbone et les charbons actifs. On ne sortirait pas du cadre de l'invention en utilisant plusieurs produits à base de carbone par exemple; (i) du graphite et des agrégats de noir de carbone; (ii) du graphite, des agrégats de noir de carbone et des fibres de carbone; (iii) des agrégats de noir de carbone et des fibres de carbone; (iv) du graphite et des fibres de carbone.

Les produits à base de carbone pouvant être utilisés sont décrits dans Handbook of fillers 2^{nd} Edition published by Chem Tec Publishing 1999 page 62 § 2.1.22, page 92 § 2.1.33 et page 184 § 2.2.2. De façon préférable, on pourra utiliser des graphites de taille comprise entre 20 et 50 µm. Parmi les noirs de carbone pouvant être utilisés on peut citer les noirs Ketjen® EC 600 JD de surface spécifique 1250 m²/gr, Ketjen® EC 300 J. de surface spécifique 800 m²/gr et le noir de la société M.M.M. vendu sous la référence Super P caractérisé par une surface spécifique de l'ordre de 57 à 67 m²/g (mesure par la méthode BET d'adsorption d'azote). On pourra de façon avantageuse utiliser les fibres de carbone de longueur de 150 µm.

**S'agissant de la poudre microcomposite** elle peut comprendre, en poids pour celles utilisées dans les couches électroactives, 2 à 40% de fluoropolymère pour respectivement 98 à 60% de charges. De façon avantageuse la poudre comprend 2 à 30% de fluoropolymère pour respectivement 98 à 70% de charges. Quant à la poudre utilisée pour le séparateur les proportions sont de 20 à 80 % de fluoropolymère pour respectivement 80 à 20 % de charges. Dans les proportions précédentes il s'agit du fluoropolymère contenant éventuellement des plastifiants ou des additifs.

La poudre microcomposite se présente sous forme de particules des charges recouvertes, avantageusement de façon uniforme, par des particules de fluoropolymère. Les particules de fluoropolymère, de taille entre 0,1 et 0,5 µm, peuvent recouvrir en partie ou en totalité les particules des charges.

La silice a une taille de l'ordre de 1 à 50 µm; les oxydes métalliques de lithium du type LiMₓO_{y} ont une taille de 1 à 50 µm; le graphite a une taille de 1 à 50 µm; le noir de carbone peut avoir une taille de 40 nm et les fibres de carbone ont une taille entre 1 et 300 µm.

La poudre microcomposite peut se présenter sous forme d'agglomérats de 2 ou plusieurs particules de charges recouvertes du polymère fluoré et liées par les particules de polymère fluoré. Ces agglomérats peuvent être de la forme d'une framboise. Ces agglomérats contiennent en géneral entre 2 et 5 particules de charges.

La présente invention concerne aussi à titre de produit une poudre microcomposite qui se présente sous forme de particules de silice recouvertes, avantageusement de façon uniforme, par des particules de fluoropolymère. Les particules de fluoropolymère, de taille entre 0,1 et 0,5 µm, peuvent recouvrir en partie ou en totalité les particules de silice.

Cette poudre microcomposite peut être préparée par coatomisation d'une solution aqueuse contenant les particules de polymère fluoré entre 0,1 et 0,5 µm et d'une solution aqueuse des charges. Elle peut aussi être préparée par floculation ou coagulation d'une solution aqueuse contenant les particules de polymère fluoré entre 0,1 et 0,5 µm et d'une solution aqueuse des charges.

**S'agissant de la fabrication de la poudre microcomposite par floculation ou coagulation** les technologies de finition d'une dispersion aqueuse sont connues en elles mêmes. La coagulation est décrite dans le chapitre "séchage" (" Drying " par P.Y. Mc Cormick, dans « Encyclopedia of Polymer Science and Engineering », Volume 5, pp. 187-203, Wiley Intersciences, 1990). On y décrit la coagulation d'une dispersion aqueuse contenant le latex ou mélange de latex de polymères ainsi que les charges, où l'on parle par exemple des sécheurs rotatifs. La floculation est aussi abordée dans le chapitre « Flocculation » par G. R. Rose, dans « Encyclopedia of Polymer Science and Engineering », Volume 7, pp. 211-233, Wiley Intersciences, 1990). On peut par exemple faire floculer les dispersions aqueuses à base de polymères et des charges par refroidissement brutal de la dispersion, ou en réduisant l'extrait sec de la dispersion par un séchage partiel, ou encore en ajoutant à celle-ci un tensioactif ou un sel la déstabilisant. Une fois la dispersion floculée, on élimine la phase aqueuse pour récupérer la poudre composite, par exemple par séchage ou par filtration.

**S'agissant de la fabrication de la poudre microcomposite par atomisation (ou coatomisation)** cette technique d'atomisation est connue en elle même. Pour une description générale de cette technologie voir par exemple le chapitre « Drying » par P.Y. Mc Cormick, dans « Encyclopedia of Polymer Science and Engineering », Volume 5, pp. 187-203, Wiley Intersciences, 1990. Les poudres microcomposites incorporant les principes actifs de la batterie (designés aussi sous le nom de charge dans ce texte) sont en général obtenues par atomisation d'une dispersion aqueuse contenant le latex ou mélange de latex de polymères ainsi que les principes actifs de la batterie.

La dispersion aqueuse des principes actifs est aussi appelée slurry. Les conditions exactes de préparation dépendent fortement de la nature des principes actifs, en particulier de l'hydrophobie ou de l'hydrophilie de leur surface, de la quantité de surface présente dans le système (qui dépend de l'extrait sec de la dispersion et de la surface spécifique des principes actifs), de l'extrait sec et de la viscosité souhaitée. En général, la préparation d'un slurry peut comprendre les étapes suivantes pour lesquelles on utilise un disperseur équipée d'un mobile d'agitation (pâles, ...) : dans de l'eau (si possible déminéralisée et/ou désionisée), on ajoute des dispersants, tensioactifs, fongicides, anti-mousse, régulateurs de pH ... puis graduellement et sous agitation modérée à moyenne on ajoute la quantité requise de principes actifs. La dispersion est ensuite en général homogénéisée à vitesse d'agitation plus élevée. La nature des dispersants varie en fonction du principe actif. Par exemple on peut utiliser des copolymères acryliques hydrosolubles salifiés. Plus particulièrement l'invention est illustrée des trois manières suivantes :

Dans une première illustration de l'invention, on prépare une dispersion aqueuse en mélangeant sous agitation le latex ou mélange de latex de polymères fluorés et le ou les dispersions aqueuses (aussi appelées slurries au pluriel) des principes actifs de la batterie. Cette dispersion aqueuse est ensuite atomisée pour conduire à une poudre composite qui peut être ensuite mise en oeuvre de manière variée. Une variante importante et significative de cette illustration consiste en la coatomisation dans un même atomiseur du latex ou mélange de latex de polymères fluorés et du ou des slurries des principes actifs de la batterie. Dans ce cas, le(s) latex et le(s) slurries sont chacun introduits dans l'atomiseur par une buse séparée et dédiée. Cette technique permet d'éviter l'étape de préparation de la dispersion précitée.

Dans une seconde illustration de l'invention, on ajoute directement et sous agitation les principes actifs de la batterie sous forme sèche au latex ou mélange de latex de polymères fluorés. Cette dispersion aqueuse, est ensuite atomisée pour conduire à une poudre composite microporeuse.

La troisième illustration de l'invention fait intervenir, outre les polymères et principes actifs déjà cités, un ou plusieurs composés organiques caractérisés par la présence d'au moins un groupe carbonyle ou carbonate, dont l'affinité pour les polymères à base de VF2 est connue. Ces composés organiques sont choisis parmi les solvants et les plastifiants entrant dans la composition de l'électrolyte liquide servant à activer la batterie. A titre d'exemple on peut citer la familles des carbonates et plus particulièrement l'Ethylène Carbonate (EC), le Propylène Carbonate (PC), le Diméthyl Carbonate (DMC), le Diméthyl Phtalate (DMP), le Diéthyl Phtalate (DEP) ainsi que ceux cités dans les brevets US 545000 et US 5720780. A titre d'exemple de plastifiants on peut citer la famille des sébaçates, phtalates, succinates, oxalates, adipate, suberate, substitués ou non, et plus particulièrement le Dioctyl Phtalate (DOP), le Dibutyl Sébaçate (DBS) et le Dibutyl Phtalate (DBP).

Les dispersions aqueuses des illustrations 1, 2 et 3 destinées à être atomisées sont préparées de préférence dans un disperseur et sous agitation. Ces dispersions sont de préférence maintenues sous agitation jusqu'à l'étape d'atomisation. Lors de l'étape de préparation des dispersions, on peut en outre ajouter une faible quantité d'additifs tels que par exemple des promoteurs d'adhésion, des dispersants et autres tensioactifs, des agents anti-mousse, des fongicides, des régulateurs de pH. La proportion relative de latex de polymères et de principes actifs (sous forme de slurry ou de charge sèche) est choisie pour obtenir après atomisation la composition finale en sec souhaitée. On peut ajuster l'extrait sec de la dispersion pour favoriser l'étape d'atomisation. Cet extrait sec dépend aussi de la quantité de surface présente dans le système. D'une manière générale on souhaite conserver un extrait sec maximal avant atomisation. Dans le cas de la coatomisation, les débits respectifs de(s) latex et de(s) slurries sont choisis pour obtenir après atomisation la composition finale en sec souhaitée. Dans le cas de principes actifs entrant dans la composition des électrodes (anode, cathode), on souhaite incorporer un maximum de principes actifs, de préférence au moins 70 % en poids, de préférence encore au moins 85 % en poids. Dans le cas de principes actifs entrant dans la composition d'un séparateur, le taux d'incorporation des principes actifs est plus faible que dans le cas des électrodes. Il se situe de préférence entre 20 et 60 % en poids.

Les conditions d'atomisation des dispersions aqueuses, et notamment la température de l'air chaud entrant dans l'atomiseur sont spécifiques aux polymères utilisés. Dans le cas d'un homopolymère de VF2, on utilise par exemple une température d'atomisation de 175°C. La granulométrie de la poudre composite obtenue dépend des conditions d'atomisation elles-mêmes mais aussi de la nature de la dispersion à atomiser et en particulier de la granulométrie des principes actifs de la batterie. Le diamètre médian à 50 % de la distribution en volume mesurée par diffraction laser est en général compris entre 2 et 150 µm, de préférence entre 2 et 40 µm, quand il s'agit de poudres ne comprenant pas de fibres de carbone . Les conditions d'atomisation peuvent être ajustées pour modifier la répartition granulométrique des poudres composites afin de favoriser telle ou telle technologie de mise en oeuvre ultérieure.

Lorsque l'invention fait intervenir des composés organiques tels que les solvants de l'électrolyte liquide, les plastifiants on distingue deux modes d'incorporation. Ces composés organiques peuvent être présents dans la dispersion de polymère et de principes actifs de la batterie avant l'étape d'atomisation. Dans ce cas les composés organiques préférés ont un point d'ébullition suffisamment haut pour qu'on les retrouve tout ou en partie dans la poudre atomisée. Ils peuvent aussi être ajoutés et mélangés après atomisation à la poudre dans un mélangeur adapté, éventuellement chauffé si le composé organique est un solide à température ambiante (cas de l'Ethylène Carbonate). Parmi ces composés organiques, on préfère ceux qui sont à la fois des plastifiants du PVDF et des solvants de l'électrolyte liquide (Ethylène Carbonate, Propylène Carbonate, Diméthyl Carbonate, Diéthyl Carbonate, Ethylméthyl Carbonate, Vinylène Carbonate, gamma-butyrolactone, d'autres composés sont cités dans le brevet US 5 720 780, puisque ces composés organiques doivent de toutes façons être présents dans la batterie activée. La présence de plastifiant dans la poudre composite permet de favoriser la mise en oeuvre ultérieure de la poudre, que celle-ci se fasse au dessus du point de fusion du polymère (auquel cas le plastifiant facilite la transformation en diminuant la viscosité de fusion) ou en dessous du point de fusion du polymère (auquel cas le plastifiant favorise la coalescence de la poudre).

**S'agissant de la mise en oeuvre de la poudre** obtenue par (co)atomisation, par floculation ou coagulation des dispersions aqueuses décrites précédemment elle peut subir un post traitement avant sa mise en oeuvre. L'addition de molécules organiques ayant une bonne affinité avec le PVDF a déjà été mentionnée, mais on peut envisager aussi les opérations suivantes :
- Lavage de la poudre composite, en particulier afin d'éliminer certains dispersants ou tensioactifs, si ceux ci s'avèrent affecter négativement le fonctionnement électrochimique de la batterie.
- Ajout d'additifs à la poudre composite, par exemple de promoteurs d'adhésion.
- Séchage sous vide de la poudre, en particulier pour éliminer les traces d'humidité.

La poudre composite selon l'invention peut être mise en oeuvre pour conduire à des éléments ― électrodes, séparateurs ― utiles pour l'obtention de batteries lithium-ion selon une grande variété de méthodes, parmi lesquelles on peut distinguer deux grandes familles :
- **Les mises en oeuvre sans solvants :** le frittage, le pressage, l'extrusion, la lamination, le calandrage, le dépôt de poudre composite par tamisage, poudrage électrostatique ou triboélectrique et toutes combinaisons de ces technologies, en particulier l'extrusion / lamination / calandrage et le poudrage /calandrage *(voir l'Exemple 3).* Ces mises en oeuvre conduisent à des films libres ou sur support. Les films obtenus ont une épaisseur comprise entre 25 µm et 5 mm, de préférence entre 50 µm et 500 µm.
- **Les mises en oeuvre avec solvants :** l'électrode ou le séparateur sont obtenus en redispersant cette poudre soit dans l'eau (l'avantage est alors celui d'un procédé écologique), soit dans un solvant latent comme l'acétone (l'avantage est alors la facilité de mise en oeuvre), soit dans la NMP (comme pour la mise en oeuvre classique d'une électrode), puis en appliquant immédiatement la « pâte » formée avec un Doctor Blade® sur un support et en évaporant le solvant utilisé (*voir les Exemples 12 et 13).* En ce sens, cette procédure est proche de celle utilisée par toute l'industrie de la batterie lithium-ion, ce qui permet de l'intégrer sans difficultés sur les équipements actuels. L'avantage qu'amène l'invention est à ce moment-là une plus grande flexibilité dans le choix du solvant et un meilleur aspect des électrodes du fait de la pré-répartition du PVDF autour de la matière active.

Dans le cas de poudres servant à la fabrication d'électrodes, on préfère les mises en oeuvre se faisant directement sur les collecteurs métalliques. Ces supports peuvent être des feuilles ou des grilles ou des mousses de métaux (cuivre, aluminium, nickel, etc) ou d'alliages de métaux. Ces substrats métalliques peuvent être éventuellement traités afin de favoriser l'adhésion des films. Pour les électrodes négatives le métal est avantageusement le cuivre et pour les électrodes positives c'est avantageusement l'aluminium.

Dans le cas de poudres servant à la fabrication de séparateurs, la mise en oeuvre peut conduire à un film libre (c'est le cas de l'extrusion en filière plate) ou se faire sur un support non adhérent, afin de faciliter ensuite le transfert du film. Le film de poudre composite servant à la fabrication de séparateur peut aussi être formé directement sur un film d'électrode.

Ces mises en oeuvre peuvent se faire en dessous ou au dessus du point de fusion du polymère fluoré employé, ce qui permet de contrôler la morphologie du film obtenu. Dans le cas du PVDF, le point de fusion de l'homopolymère est d'environ 170°C.

**S'agissant de l'obtention d'une batterie** Le montage final est connu en soi et a été décrit par exemple dans les brevets US 5 296 318, US 5939217, US 5999102, US 5805069, US 5804333 et US 5633099. Dans la plupart des cas, il s'agit de co-enrouler une électrode positive, un séparateur et une électrode négative, et de placer l'ensemble dans un emballage rigide (type cylindre en aluminium) ou souple en faisant la connexion avec les deux pôles de la batterie, puis d'activer la batterie en la remplissant avec l'électrolyte (LiPF₆ ou LiBF₄ ou tout autre sel de lithium dans un mélange de solvants carbonates ou la gamma-butyrolactone).

### [Exemples]

On a utilisé les produits suivants :
**Le Latex n°1 de PVDF** est un latex d'homopolymère de VF2, obtenu par polymérisation en émulsion, et caractérisé par un extrait sec en poids de 35 % (mesure par pesée résiduelle après séchage du latex pendant 10 min à 160°C sur un appareil de type HG53 de la société Mettler Toledo), ainsi que par une taille moyenne de particules de 140 nm (mesure par diffraction laser sur un granulomètre de marque Coulter). Le PVDF obtenu est caractérisé par une viscosité à l'état fondu de 1200 Pa.s à 230°C sous un cisaillement de 100 s⁻¹, par un point de fusion de 171°C (mesure selon la norme ISO 3146) et par un module d'élasticité en traction à 23°C de 2200 MPa (mesure selon la norme ISO 527). La densité du PVDF est de 1.78 (mesure selon la norme ISO 1183).
**Le Latex n°2 de PVDF** est un latex de copolymère VF2/HFP (10 % en poids d'HFP), obtenue par polymérisation en émulsion, et caractérisé par un extrait sec en poids de 31 %, ainsi que par une taille moyenne de particules de 230 nm. Ce PVDF est caractérisé par une viscosité à l'état fondu de 2350 Pa.s à 230°C sous un cisaillement de 100 s⁻¹, par un point de fusion de 164°C et par un module d'élasticité en traction à 23°C de 690 MPa. Sa densité est de 1.78.
**Le Latex n°3 de PVDF** est un latex de copolymère VF2/HFP (12 % en poids d'HFP), obtenue par polymérisation en émulsion, et caractérisé par un extrait sec en poids de 31 %, ainsi que par une taille moyenne de particules de 230 nm. Ce PVDF est caractérisé par une viscosité à l'état fondu de 2500 Pa.s à 230°C sous un cisaillement de 100 s⁻¹, par un point de fusion de 143°C et par un module d'élasticité en traction à 23°C de 700 MPa. Sa densité est de 1.78. Après atomisation et séchage, la poudre issue de ce Latex n°3 est appelée **PVDF n°3.**
   **PVDF n°3 :** voir le paragraphe précédent.
**Le Graphite** est un produit commercial disponible auprès de la société Osaka Gas Chemicals Co. sous la référence MCMB 6-28. Il est caractérisé par un diamètre médian à 50 % de la distribution en volume de l'ordre de 8 µm et par un diamètre à 98 % de la distribution en volume de l'ordre de 25 µm (mesure par diffraction laser sur un granulomètre Helos de marque Sympatec). Il possède une densité réelle de 2.21.
**Le Noir de Carbone** Conducteur est un produit commercial disponible auprès de la société M.M.M. sous la référence Super P. Il est caractérisé par une surface spécifique de l'ordre de 57 à 67 m²/g (mesure par la méthode BET d'adsorption d'azote). La taille moyenne de particules observée par le fournisseur en microscopie électronique est d'environ 40 nm. La densité réelle du noir est de 1.93.
**La dispersion aqueuse de silice** (slurry) est un produit disponible auprès de la société RHODIA sous la référence Tixosil 365 SP. L'extrait sec de cette dispersion est de 22 %. La silice est caractérisée par une surface spécifique de l'ordre de 155 m²/g et une densité réelle de 2.00.
**Le Feuillard de Cuivre** est un produit commercial disponible sous forme de bobine auprès de la société Fukuda Metal Foil & Powder Co. sous la référence CF-LB2-12. Ce feuillard est obtenu par électrodéposition du cuivre et est caractérisé par une épaisseur de 12 µm et par une largeur de 350 mm.

**Exemple 1** : Préparation de la dispersion aqueuse de Graphite et de Noir de Carbone (slurry). On introduit progressivement dans un disperseur à turbine multipales de marque Dispermat, et sous agitation modérée (100 tr/min), les constituants de la dispersion aqueuse de graphite et de noir de carbone (slurry):

| Ordre d'Introduction | Nature du Constituant | Proportion en sec et en poids du Constituant (%) |
|---|---|---|
| 1 | Eau déminéralisée | voir ci dessous |
| 2 | Agent antimousse de type polyéther modifié siloxane (produit commercial disponible auprès de la société BYK Chemie sous la référence BYK 019). | 0.05 |
| 3 | Dispersant de type polycarboxylate de potassium (produit commercial disponible auprès de la société Coatex sous la référence COADIS 123 K). | 3.05 |
| 4 | Graphite | 94.45 |
| 5 | Noir de Carbone | 2.45 |

La quantité d'eau déminéralisée introduite est telle que l'extrait sec en poids de cette dispersion est de 60 %. Après introduction des constituants, le mélange est ensuite homogénéisé à une vitesse de 1000 tr/min.

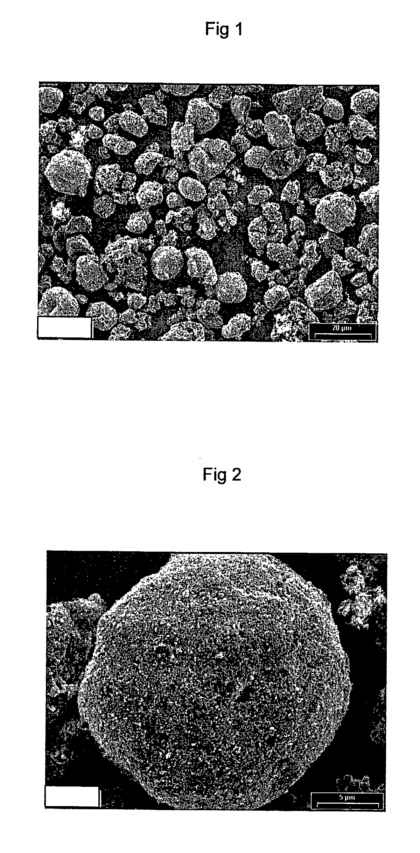

**Exemple 2** : Préparation de la poudre composite à base de Latex de PVDF, de Graphite et de Noir de Carbone: Dans le même disperseur que précédemment et contenant la dispersion aqueuse homogène de graphite et de noir de carbone (slurry) de l'Exemple 1, on introduit progressivement et sous agitation modérée (300 tr/min) le Latex n°1 de PVDF dans des proportions telles que la proportion à sec et en poids de Graphite + Noir de Carbone par rapport au total Graphite + Noir de Carbone + PVDF soit de 86 %. On ajoute aussi graduellement de l'eau déminéralisée afin de ramener l'extrait sec global en poids du mélange du slurry et du latex à 20 %.
Ce mélange liquide maintenu sous agitation est ensuite atomisé sur un atomiseur de type Minor Mobile (fabriqué par la société NIRO) dans les condition suivantes :
- Débit horaire du mélange = 2 L/h
- Température d'entrée imposée de l'air chaud arrivant sur la turbine = 175°C
- Température de sortie mesurée en sortie d'air = 55°C
- Pression d'Air imposant la vitesse de la turbine = 2.2 bars
La poudre composite microporeuse obtenue est caractérisée par un diamètre médian à 50 % de la distribution en volume de l'ordre de 9 µm et par un diamètre à 98 % de la distribution en volume de l'ordre de 30 µm (mesure par diffraction laser sur un granulomètre Helos de marque Sympatec). Une morphologie représentative (clichés obtenus en microscopie électronique à balayage sur un appareil de type FEG-XL30 de la société Philips) de la poudre ainsi que d'un grain microporeux de cette poudre est representée sur les figures 1 et 2. Sur la fig 1 on voit des particules de graphite de 5 à 15 µm recouverte d'un produit blanc, la fig 2 est un agrandissement de la précédente et montre une bille de graphite recouverte de petites particules blanches de PVDF. La poudre est séchée 15 jours à 40°C en étuve ventilée avant utilisation.

### Exemple 3 : Mise en oeuvre par poudrage + calandrage de la poudre composite de l'Exemple 2.

La bobine de cuivre se trouve en tête de l'installation, la feuille de cuivre est déroulée et passe sur des rouleaux intermédiaires. La vitesse de déroulement retenue est de 1.2 m/mn. La poudre composite de l'Exemple 2 est déposée par effet triboélectrique (à l'aide d'un pistolet à poudre) sous la forme d'une couche uniforme (l'épaisseur de cette couche dépend de l'épaisseur finale souhaitée après calandrage). La feuille de cuivre est portée à environ 200°C à l'aide d'une source infra rouge, afin de favoriser la coalescence de la couche uniforme et son adhésion sur la feuille de cuivre. Une deuxième source infra rouge est disposée en aval du pistolet à poudre de manière à chauffer la surface supérieure de la couche uniforme.

L'ensemble de la feuille de cuivre recouverte de la couche uniforme passe ensuite dans un ensemble de calandrage, entre un rouleau en caoutchouc et un rouleau métallique régulé (chauffe ou refroidissement). Puis cet ensemble, qui constitue maintenant une électrode selon l'invention, a alors une épaisseur d'environ 140 µm. La température du rouleau en caoutchouc est obtenue par conduction à partir d'un second rouleau métallique régulé (chauffe ou refroidissement) adjacent. L'ensemble passe ensuite sur un troisième rouleau métallique régulé (chauffe ou refroidissement). Les températures de tous ces rouleaux peuvent varier entre 25 et 160°C. Elles sont choisies afin de favoriser la formation d'une pellicule de bonne tenue et d'éviter tout dépôt de poudre composite sur les rouleaux. L'électrode passe ensuite sur un ensemble de rouleaux qui permet de réguler la tension de la bobine. L'électrode est finalement bobinée.

**Exemple 4** : Mise en oeuvre par pressage de la poudre composite microporeuse de l'Exemple 2. La poudre composite selon l'invention peut être également mise en oeuvre par pressage pour conduire à un film libre. On dépose sur les plateaux d'une presse de laboratoire hydraulique de type LABO 60 de la société Pinette Emidecau Industries une quantité adaptée de poudre composite de l'Exemple 2. On a préalablement déposé sur les plateaux de la presse du papier siliconé afin de faciliter la récupération du film. La poudre composite de l'Exemple 2 est pressée à une température de plateaux de 250°C selon le cycle de pression suivant : 1 min sans pression, puis 30 s à 4 bars, puis 1 min sous 34 bars. A l'issue du cycle de refroidissement on obtient un film libre d'épaisseur 600 µm qui peut par exemple être ensuite laminé sur une feuille de cuivre afin de constituer une électrode utile à la fabrication de batteries Li-ion. Dans cet exemple, la température des plateaux, la durée de pressage ainsi que la pression appliquée peuvent être choisies afin de faire varier l'épaisseur, la cohésion et la morphologie du film.

**Exemple 5** : Caractérisation du film de l'Exemple 4:
On effectue les deux tests suivants sur le film de l'Exemple 4 :
- Mesure indirecte de porosité moyenne : Dans le film de l'Exemple 4, on découpe à l'aide d'une lame de rasoir 5 échantillons de forme et dimensions imposées (parallélépipède de côté 20 mm et d'épaisseur 600 µm), donc de volume connu. La composition en poids en PVDF, Graphite et Noir de Carbone, ainsi que les densités utiles étant connues, on calcule la densité d'un film sans porosité : 2.13. On calcule alors le poids théorique d'échantillons sans porosité (511 mg). La comparaison de ce résultat à la valeur moyenne mesurée pour les 5 échantillons (307 mg) permet de calculer une porosité moyenne : 40 %.
- Mesure de prise en poids moyenne d'un mélange EC/DMC : Dans le film de l'Exemple 4, on prélève 3 échantillons de forme libre. Ces échantillons sont introduits dans un réacteur en verre thermostaté (60 °C) contenant un mélange 50/50 en poids d'Ethylène Carbonate (EC) et de Diméthyl Carbonate (DMC). On mesure la prise en poids moyenne des échantillons à l'équilibre, observé après 2 jours. On en déduit un pourcentage moyen de prise en poids d'EC/DMC : 42.5 %.

**Exemple 6** : Préparation de la poudre composite microporeuse à base de PVDF et de Silice.
Dans le disperseur de l'Exemple 1 et contenant la dispersion aqueuse homogène de Silice, on introduit progressivement et sous agitation modérée (300 tr/min) le Latex n°2 de PVDF dans des proportions telles que la proportion à sec et en poids de Silice par rapport au total Silice + PVDF soit de 40 %. On ajoute aussi graduellement de l'eau déminéralisée afin de ramener l'extrait sec global en poids du mélange du slurry et du latex à 11 %.
Ce mélange liquide maintenu sous agitation est ensuite atomisée sur un atomiseur de type Minor Mobile (fabriqué par la société NIRO) dans les condition suivantes :
- Débit horaire du mélange = 2 L/h
- Température d'entrée imposée de l'air chaud arrivant sur la turbine = 175°C
- Température de sortie mesurée en sortie d'air = 60°C
- Pression d'Air imposant la vitesse de la turbine = 2.2 bars

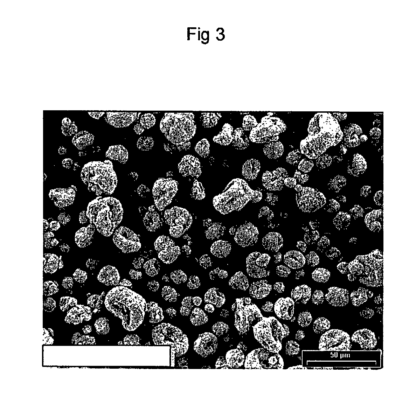

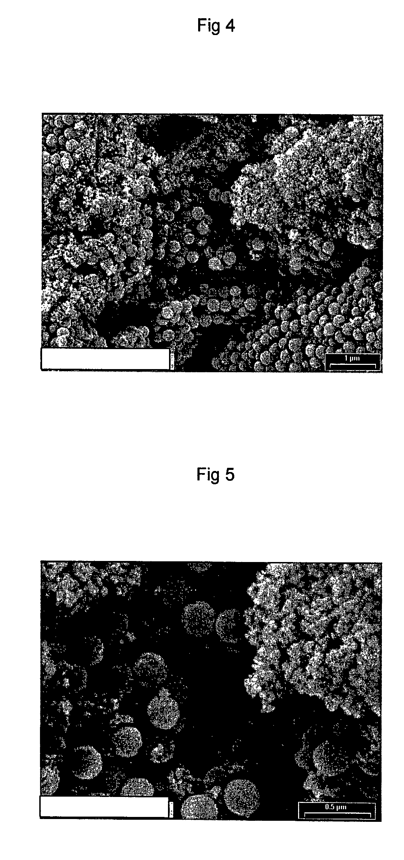

La poudre composite microporeuse obtenue est caractérisée par un diamètre médian à 50 % de la distribution en volume de l'ordre de 3 µm et par un diamètre à 98 % de la distribution en volume de l'ordre de 15 µm (mesure par diffraction laser sur un granulomètre Helos de marque Sympatec). Une morphologie représentative (clichés obtenus en microscopie électronique à balayage sur un appareil de type FEG-XL30 de la société Philips) de la poudre ainsi que d'un grain microporeux de cette poudre est representée sur les figures 3, 4 et 5. La fig 3 montre des grains de silice recouverts de particules de PVDF . La fig 4 qui est un agrandissement de la fig précédente montre des petites billes de PVDF à la surface de grains de silice. La fig 5 est un agrandissement de la fig précédente. La poudre est séchée 15 jours à 40°C en étuve ventilée avant utilisation.

**Exemple 7 :** Mise en oeuvre par pressage de la poudre composite microporeuse de l'Exemple 6.
On dépose sur les plateaux d'une presse de laboratoire hydraulique de type LABO 60 de la société Pinette Emidecau Industries une quantité adaptée de poudre composite de l'Exemple 6. On a préalablement déposé sur les plateaux de la presse du papier siliconé afin de faciliter la récupération du film. La poudre composite de l'Exemple 2 est pressée à une température de plateaux de 220 °C selon le cycle de pression suivant : 1 min sans pression, puis 30 s à 4 bars, puis 1 min sous 150 bars. A l'issue du cycle de refroidissement on obtient un film libre d'épaisseur 350 µm qui peut par exemple être ensuite assemblé avec l'électrode de l'Exemple 3. Dans cet exemple, la température des plateaux, la durée de pressage ainsi que la pression appliquée peuvent à nouveau être choisies afin de faire varier l'épaisseur, la cohésion et la morphologie du film.

**Exemple 8** : Caractérisation du film de l'exemple 7:
On effectue les deux tests suivants sur le film de l'Exemple 7 :
- Mesure indirecte de la porosité moyenne : Dans le film de l'Exemple 7, on prélève 5 échantillons de forme et dimensions imposées (disque de diamètre 16 mm et d'épaisseur 350 µm), donc de volume connu. La composition en poids en PVDF et en Silice, ainsi que les densités utiles étant connues, on calcule la densité d'un film sans porosité : 1.86. On calcule alors le poids théorique d'échantillons sans porosité (131 mg). La comparaison de ce résultat à la valeur moyenne mesurée pour les 5 échantillons (86 mg) permet de calculer une porosité moyenne de 34 %.
- Mesure de prise en poids moyenne d'un mélange EC/DMC : Dans le film de l'Exemple 7, on prélève 3 échantillons de forme libre. Ces échantillons sont introduits dans un réacteur en verre thermostaté (60 °C) contenant un mélange 50/50 en poids d'Ethylène Carbonate (EC) et de Diméthyl Carbonate (DMC). On mesure la prise en poids moyenne des échantillons à l'équilibre, observé après 2 jours. On en déduit un pourcentage moyen de prise en poids d'EC/DMC : 93 %.

**Exemple 9** : Préparation de la dispersion aqueuse de Graphite (slurry):
On introduit progressivement dans un disperseur à turbine multipales de marque Dispermat, et sous agitation modérée (100 tr/min), les constituants de la dispersion aqueuse de graphite et de noir de carbone (slurry) :

| Ordre d'Introduction | Nature du Constituant | Proportion en sec et en poids du Constituant ( %) |
|---|---|---|
| 1 | Eau déminéralisée | voir ci dessous |
| 2 | Dispersant de type polycarboxylate de potassium (produit commercial disponible auprès de la société Coatex sous la référence COADIS 123 K). | 1.1 |
| 3 | Graphite | 98.9 |

La quantité d'eau déminéralisée introduite est telle que l'extrait sec en poids de cette dispersion est de 60 %. Après introduction des constituants, le mélange est ensuite homogénéisé à une vitesse de 1000 tr/min.

**Exemple 10** : Préparation de la poudre composite à base de Latex de PVDF et de Graphite:
Dans le même disperseur que précédemment et contenant la dispersion aqueuse homogène de graphite (slurry) de l'Exemple 9, on introduit progressivement et sous agitation modérée (300 tr/min) le Latex n°3 de PVDF dans des proportions telles que la proportion à sec et en poids de Graphite par rapport au total Graphite + PVDF + Dispersant soit de 90 %. On ajoute aussi graduellement de l'eau déminéralisée afin de ramener l'extrait sec global en poids du mélange du slurry et du latex à 20 %.

Ce mélange liquide maintenu sous agitation est ensuite atomisé sur un atomiseur de type Minor Mobile (fabriqué par la société NIRO) dans les condition suivantes :
- Débit horaire du mélange = 2 L/h
- Température d'entrée imposée de l'air chaud arrivant sur la turbine = 175°C
- Température de sortie mesurée en sortie d'air = 55°C
- Pression d'Air imposant la vitesse de la turbine = 2.2 bars

La poudre composite microporeuse obtenue est caractérisée par un diamètre médian à 50 % de la distribution en volume de l'ordre de 9 µm et par un diamètre à 98 % de la distribution en volume de l'ordre de 30 µm (mesure par diffraction laser sur un granulomètre Helos de marque Sympatec).

**Exemple 11 (comparatif)** : Mise en oeuvre d'une électrode négative pour batterie Li-ion selon l'art antérieur:
Dans un erlenmayer, on dissout 5 g de PVDF n°3 dans 45 g de N-methyl-2-pyrrolidone (abrégé par la suite « NMP » de MERCK, pureté > 99%) sous agitation magnétique à 55°C pendant 2 heures. On ajoute à cette solution 45 g de poudre de Graphite et 15 g de NMP. Ces poudres sont dispersées dans la solution par agitation magnétique à température ambiante pendant 15 minutes, puis pendant 5 minutes dans un disperseur à turbine multipales de marque Dispermat et sous forte agitation (2000 tr/min). Le slurry obtenu est étalé sur une feuille de cuivre d'épaisseur 20 µm puis un film est formé au moyen d'une racle manuelle Doctor Blade réglée à 400 µm. Le film est séché à 130°C dans une étuve ventilée pendant 10 minutes, puis à 130°C sous vide pendant 1 heure. Cette électrode obtenue est ensuite pressée pendant 3 minutes à 130°C sous une pression de 7 tonnes pour réduire sa porosité et améliorer l'aspect de surface. La couche conductrice ainsi formée sur la feuille de cuivre est ainsi composée de 10 % en poids de PVDF n°3 et de 90 % de Graphite. Son épaisseur est de 120 µm en moyenne.

**Exemple 12** : Mise en oeuvre d'une électrode négative par voie « NMP » de la poudre composite de l'Exemple 10:
Dans un erlenmayer, on disperse 20 g de la poudre de l'Exemple 10 dans 35 g de NMP dans un disperseur à turbine multipales de marque Dispermat et sous forte agitation (2000 tr/min) à température ambiante pendant 5 minutes. Le slurry obtenu est étalé sur une feuille de cuivre d'épaisseur 20 µm, puis un film est formé au moyen d'une racle manuelle Doctor Blade réglée à 400 µm. Le film est séché à 130°C dans une étuve ventilée pendant 10 minutes, puis à 130°C sous vide pendant 1 heure. Cette électrode obtenue est ensuite pressée pendant 3 minutes à 130°C sous une pression de 7 tonnes pour réduire sa porosité et améliorer l'aspect de surface. La couche conductrice ainsi formée sur la feuille de cuivre est ainsi composée de 9 % en poids de PVDF n°3, 1 % de COADIS 123K (total de matière organique = 10 %) et de 90 % de Graphite. Son épaisseur est de 120 µm en moyenne.

**Exemple 13** : Mise en oeuvre d'une électrode négative par voie « acétone » de la poudre composite de l'Exemple 10:
Dans un erlenmayer, on disperse 20 g de la poudre de l'Exemple 10 dans 35 g d'acétone (grade NORMAPUR de PROLABO) avec une spatule à température ambiante pendant 5 minutes. Le slurry obtenu est étalé sur une feuille de cuivre d'épaisseur 20 µm puis un film est formé au moyen d'une racle manuelle Doctor Blade réglée à 400 µm. Le film est séché à température ambiante pendant 30 minutes. Cette électrode obtenue est ensuite pressée pendant 3 minutes à 130°C sous une pression de 7 tonnes pour réduire sa porosité et améliorer l'aspect de surface. La couche conductrice ainsi formée sur la feuille de cuivre est ainsi composée de 9 % en poids de PVDF n°3, 1 % de COADIS 123K (total de matière organique = 10 %) et de 90 % de Graphite. Son épaisseur est de 120 µm en moyenne.

**Exemple 14 :** Détermination des propriétés d'adhésion entre la couche conductrice et la feuille métallique d'une électrode négative:
Des bandes de largeur 25 mm et d'au moins 10 cm de longueur sont découpées dans l'assemblage décrit dans l'Exemple 11, dans l'Exemple 12 ou dans l'Exemple 13 puis fixées sur un support métallique rigide par une bande adhésive double face (de marque TESA, référence #4970) de même largeur sur la face couche conductrice. L'assemblage est plaqué au support par simple pression de la main. L'ensemble support métallique rigide + bande adhésive double face + couche conductrice + feuille métallique est appelé « éprouvette de pelage ».

Les éprouvettes de pelage sont ensuite installées sur un dynamomètre DY30 distribué par ADAMEL LHOMARGY. Le support métallique est gardé fixe. La rupture entre la couche conductrice et la feuille d'aluminium est amorcée soit à la main, soit au moyen d'une lame de rasoir. La partie libre de la feuille d'aluminium est fixée à un mord mobile, puis est tiré à 180° avec une vitesse de traction de 100 mm / min. La force de traction instantanée est déterminée par une cellule de force utilisées de 10 N. La valeur moyenne de cette force pendant le pelage entre la feuille métallique et la couche conductrice est appelée « force de pelage ».

**Exemple 15 :** Détermination empirique de la flexibilité d'une électrode négative:
Des bandes d'au moins 5 cm de longueur et d'au moins 2 cm de largeur sont découpées dans l'assemblage décrit dans l'Exemple 11, dans l'Exemple 12 ou dans l'Exemple 13. Ces bandes sont enroulées sur une barre métallique de 1 mm de rayon ou sont pliées sur elles-mêmes. Nous attribuons alors les notes suivantes :

| Note | Commentaires |
|---|---|
| 0 | Très mauvaise flexibilité, cassure immédiate sur la barre de 1 mm de diamètre |
| 1 | Flexibilité moyenne, petite cassure sur la barre et cassure importante lors du pliage |
| 2 | Bonne flexibilité, pas de cassure sur la barre et petite cassure lors du pliage |
| 3 | Excellente flexibilité, aucune cassure lors des deux opérations. |

**Exemple 16** : Comparaison d'une électrode négative selon l'invention obtenue avec une poudre microcomposite et d'une électrode obtenue sans cette poudre microcomposite.
En utilisant le procédé d'évaluation décrit dans les Exemples 14 et 15, la force de pelage entre la couche conductrice et la feuille de cuivre peut être mesurée ainsi que la flexibilité de ces électrodes. Les résultats sont rassemblés dans le tableau suivant :

| Electrode | Force de pelage (N/25 mm) | Flexibilité |
|---|---|---|
| Exemple 11 | 0.5 | 2 |
| Exemple 12 | 0.5 | 3 |
| Exemple 13 | 0.35 | 3 |

Du fait de la pré-répartition du PVDF autour de la charge de matière active lors de l'étape d'atomisation, l'électrode obtenue montre une meilleure flexibilité pour des valeurs d'adhésion similaires entre la couche conductrice et la feuille de cuivre.

## Revendications

1. Élément de batterie Lithium-ion choisi parmi le séparateur et les couches électroactives et qui résulte de la mise en forme d'une poudre microcomposite comprenant un polymère fluoré sous forme de particules entre 0,1 et 0,5 µm et des charges.

2. Élément selon la revendication 1 dans lequel le polymère fluoré de la poudre microcomposite est un PVDF homopolymère ou copolymère.

3. Élément selon l'une quelconque des revendications précédentes dans lequel les charges de la poudre microcomposite sont choisies parmi la silice, les oxydes métalliques de lithium du type LiMₓO_{y} (dans lequel M est un métal), le graphite, les agrégats de noir de carbone, les fibres de carbone et les charbons actifs.

4. Élément selon l'une quelconque des revendications précédentes dans lequel la poudre microcomposite est préparée par (co)atomisation soit d'une solution aqueuse contenant les particules de polymère fluoré entre 0,1 et 0,5 µm et d'une solution aqueuse des charges soit d'une d'une solution aqueuse contenant les particules de polymère fluoré entre 0,1 et 0,5 µm et les charges.

5. Élément selon l'une quelconque des revendications 1 à 3 dans lequel la poudre microcomposite est préparée par floculation ou coagulation d'une solution aqueuse contenant les particules de polymère fluoré entre 0,1 et 0,5 µm et les charges.

6. Élément selon selon l'une quelconque des revendications précédentes qui est une couche électroactive et dans laquelle les proportions sont de 2 à 40% de fluoropolymère pour respectivement 98 à 60% de charges.

7. Couche électroactive selon la revendication 6 dans laquelle les charges sont choisies parmi le graphite, les agrégats de noir de carbone, les fibres de carbone et les charbons actifs.

8. Électrode négative constituée de la couche electroactive de la revendication 7 associée à une couche de cuivre.

9. Couche électroactive selon la revendication 6 dans laquelle les charges sont choisies parmi les oxydes métalliques de lithium du type LiMₓO_{y} (dans lequel M est un métal).

10. Électrode positive constituée de la couche electroactive de la revendication 9 associée à une couche d'aluminium.

11. Élément selon l'une quelconque des revendications 1 à 5 qui est un séparateur et dans lequel les proportions sont de 20 à 80 % de fluoropolymère pour respectivement 80 à 20 % de charges.

12. Séparateur selon la revendication 11 dans lequel les charges sont la silice.

13. Batterie Lithium-ion comprenant au moins un élément choisi parmi le séparateur de la revendication 12, une couche électroactive selon les revendications 6, 7 ou 9, une électrode négative selon la revendication 8 et une électrode positive selon la revendication 10.

14. Poudre microcomposite qui se présente sous forme de particules de silice recouvertes en tout ou partie par des particules de fluoropolymère de taille entre 0,1 et 0,5 µm.

15. Poudre selon la revendication 14 dans laquelle les particules de PVDF recouvrent de façon uniforme les particules de silice.

16. Poudre selon la revendication 14 ou 15 dans laquelle les proportions sont de 20 à 80 % de fluoropolymère pour respectivement 80 à 20 % de silice.
